# EUROPEAN PATENT SPECIFICATION

(11) **EP 4 586 865 B1**
(45) Date of publication and mention of the grant of the patent: **09.09.2026**
(21) Application number: 23787140.5
(22) Date of filing: 17.10.2023
(51) Int. Cl.: A47J 31/52, A47J 31/42

(54) **COFFEE MACHINE AND METHOD OF CALCULATING THE GRINDING TIME OF A COFFEE GRINDER INCORPORATED IN SAID COFFEE MACHINE**
KAFFEEMASCHINE UND VERFAHREN ZUR BERECHNUNG DER MAHLZEIT EINER IN DER KAFFEEMASCHINE EINGEBAUTEN KAFFEEMÜHLE
MACHINE À CAFÉ ET PROCÉDÉ DE CALCUL DE TEMPS DE MOUTURE D'UN MOULIN À CAFÉ INTÉGRÉ À LADITE MACHINE À CAFÉ

(30) Priority: 27.10.2022 IT 202200022194
(43) Date of publication of application: 23.07.2025
(73) Proprietor: De' Longhi Appliances S.r.l., 31100 Treviso (IT)
(72) Inventor: EVANGELISTI, Paolo, 31100 Treviso (IT); BONOTTO, Davide, 31100 Treviso (IT); ACCIARI, Alberto, 31100 Treviso (IT); PIOVAN, Nicola, 31100 Treviso (IT)
(74) Representative: Rapisardi, Mariacristina
(86) International application number: PCT/EP2023/078767
(87) International publication number: WO 2024/088821

(56) References cited:
- WO-A1-2022/133542
- US-A1- 2016 366 905
- US-A1- 2022 240 711

## Description

The present invention relates to a coffee machine and a method for calculating the grinding time of a coffee grinder incorporated in said coffee machine.

The execution of a correct dispensing cycle, as is well known, involves loading the correct amount of ground coffee into the brewing chamber.

The quantity of ground coffee dispensed depends, with the same grinding time, on the flow rate of the grinder, which can vary over time due to component wear.

Some well-known espresso machines have algorithms for updating the grind flow rate of the coffee grinder, so that, knowing the actual grind flow rate, they can operate the grinder for the time needed to dispense the precise amount of ground coffee required by the selected recipe. Some espresso machines are able to calculate the amount of ground coffee in the brewing chamber by acquiring the value of calculation variables from the pressing step of the ground coffee charge that must necessarily precede the brewing step.

Obviously, this calculation method cannot be used in coffee machines that also dispense brew drip or American coffee because in that case the pressing step upstream of the brewing step is absent.

WO 2022/133542 A1 discloses a machine with a grinder and a tamping mechanism for pressing the coffee grounds; US 2016/366905 A1 refers to a method for producing a coffee beverage; US 2022/240711 A1 relates to coffee packing and dosing devices and machines.

There is therefore a need to provide a coffee machine that can precisely control the amount of ground coffee dispensed into the brewing chamber regardless of whether an espresso or drip or American coffee brewing cycle is selected.

The technical task of the present invention is, therefore, to develop a coffee machine and a method for calculating the grinding time of a coffee grinder incorporated in said coffee machine that will eliminate the technical drawbacks present in the known technique.

**In** the context of this technical task, one aim of the invention is to realise a coffee machine that can perform a dispensing cycle precisely according to the specifications of the coffee recipe selected by the user.

The technical task, as well as these and other purposes, according to the present invention are achieved by a coffeee machine comprising a coffee grinder, a brewing cylinder movable along a direction of translation and presenting a brewing chamber configured to receive a charge of ground coffee dispensed from said grinder, an ejection piston movable along the brewing chamber for ejecting the spent ground coffee charge, a closing piston of said brewing chamber, wherein said closing piston is movable along said direction of translation in contrast and by action of elastic means, a controller having in its memory an algorithm for calculating the grinding time of said grinder, said controller being programmed to drive a dispensing cycle which sequentially provides a closing step of the brewing chamber where the brewing cylinder is moved towards the closing piston, a brewing step with the brewing cylinder stopped, and a drying step where the brewing cylinder is further moved towards the closing piston for compressing the spent ground coffee charge against the closing piston and draining the liquid contained therein to a discharge duct equipped with a discharge valve, characterised by the fact that it comprises detection means for detecting a height of the dried spent ground coffee charge present in the brewing chamber and by the fact that said controller is programmed to calculate from the detected value of said height the weight of said dried spent ground coffee charge, feed said calculation algorithm with the value of said calculated weight to update the grinding time of said grinder, and employ said updated grinding time for a subsequent dispensing cycle.

In a preferred embodiment of the invention said detection means comprise a sensor of a threshold position of said closing piston, and a current position sensor of said brewing cylinder, and said controller is programmed for:
- moving said brewing cylinder towards said closing piston with said empty brewing chamber until identifying a predefined position assumed by said brewing cylinder at the achievement of said threshold position by said closing piston pushed by said ejection piston and counteracted by said elastic means;
- with each dispensing cycle, performing the brewing step at a given brewing position of the brewing cylinder, and performing the drying step by moving the brewing cylinder towards the closing piston up to a final position corresponding to the detection of said threshold position of the closing piston;
- calculating said height of the dried spent ground coffee charge from the difference between said predefined position and said final position.

This controller is programmed to determine this brewing position from the drink selection made by the user, if the selection refers to drip or American coffee.

If, on the other hand, the selection relates to an espresso coffee, said controller is programmed to determine said brewing position from the position assumed by said brewing cylinder when the closing piston reaches said threshold position in a pressing step of the ground coffee charge prior to the brewing step, where the pressing step involves after the closing step a movement of the brewing cylinder towards the closing piston.

This drying step may be formed of a single step defined by a continuous movement of the brewing cylinder, or it may be formed of two or more sub-steps involving movements of the brewing cylinder separated by a waiting time period.

Normally, this drying step involves a first and a second drying sub-step separated by a waiting time period, where each drying sub-step involves moving the brewing cylinder towards the closing piston to an end position corresponding to the detection of said threshold position of the closing piston.

In a preferred embodiment of the invention said controller is programmed to update the grinding time by said calculation algorithm only if at the start position of said first and second drying sub-steps said closing piston has not already reached said threshold position.

In a preferred embodiment of the invention said elastic means are pre-tensioned to enable said threshold position to be reached by said closing piston when a pressure of between 1 bar and 3 bar acts on the closing piston from the inside of the brewing chamber.

In a preferred embodiment of the invention said ejecting piston has a telescopic stem hinged to a fixed pin.

The present invention further discloses a method for calculating the grinding time of a coffee grinder incorporated in a coffee machine comprising a brewing cylinder movable along a direction of translation and presenting a brewing chamber configured to receive a charge of coffee ground dispensed from said coffee grinder for performing a brewing cycle, an ejection piston sliding along said brewing chamber for ejecting the spent ground coffee charge, a closing piston of said brewing chamber, where said closing piston is movable along said translation direction in contrast and by action of elastic means, a controller presenting in memory an algorithm for calculating the grinding time of said grinder, said controller being programmed to drive a dispensing cycle comprising in sequence a closing step of the brewing chamber where the brewing cylinder is moved towards the closing piston, a brewing step with the brewing cylinder stopped and a drying step wherein the brewing cylinder is further moved towards the closing piston for compressing the spent coffee charge against the closing piston and draining the liquid contained therein to an outlet duct equipped with an outlet valve, characterised by the fact of detecting a height of the dried spent coffee charge , calculating from the detected value of said height the weight of said dried spent coffee charge , feeding said calculation algorithm with the value of said weight calculated to update the grinding time of said grinder for a subsequent dispensing cycle.

Further features and advantages of the invention will become more apparent from the description of a preferred but not exclusive form of execution of the coffee machine according to the invention, illustrated by way of illustration and not limitation in the accompanying drawing, in which
Figure 1 shows a general diagram of the coffee machine's hydraulic circuit;

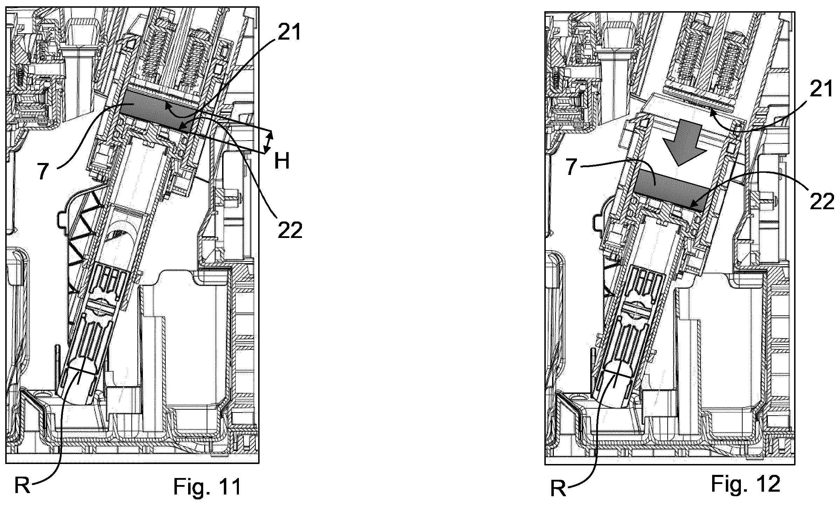

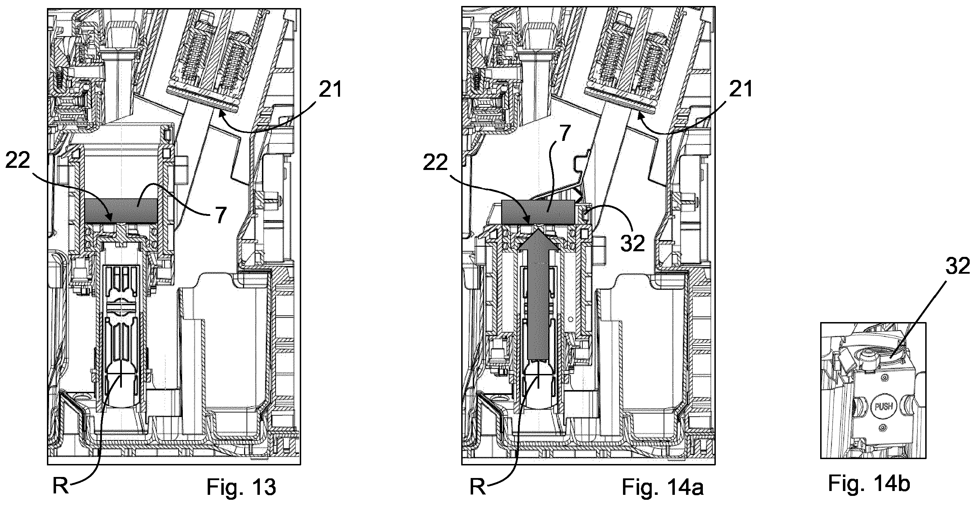

Figures 2 to 14a show the sequence of steps in a coffee dispensing cycle;
Figure 14b shows a detail of the scraper;
Figures 15a - 15e show the sequence of creating the brewing chamber and releasing the upper part of the ejection piston stem from the lower part, with also enlarged construction details A, B and C;
Figure 16 shows the principle of calculating the amount of coffee in the brewing chamber in three different dispensing cycles performed correctly;
Figures 17a and respectively 17b show another embodiment of the invention wherein the closing piston assumes the threshold position and respectively the upper end position, and wherein the threshold position sensor of the closing piston is still formed by a microswitch but this time assisted by an additional microswitch which only acts as a safety switch to detect the upper end position of the closing piston;
Figures 18a, 18b show another way of realising the two-position closing piston position sensor, where the closing piston position sensor is formed by a potentiometric linear position sensor;
Figures 19a, 19b show one way of realising the two-position closing piston position sensor, where the closing piston position sensor is formed by an inductive linear position sensor.

With reference to the above-mentioned figures, a coffee machine is shown with the overall reference number 1.

The coffee machine 1 comprises a frame with a housing 2 for a brewing cylinder 3 that delimits a brewing chamber 4 suitable for receiving a charge of ground coffee 5 directly from a grinder 6. The brewing cylinder 3 has a reversible movement in a vertical plane that includes a translation in an inclined T-direction.

As we shall see, the movement of the brewing cylinder 3 also includes a rotation to a position for receiving a fresh ground coffee charge 5 and discharging the spent ground coffee charge 7 and a further movement in a vertical direction.

The horizontal axis of rotation of brewing cylinder 3 is indicated by R in the figures.

The coffee machine 1 therefore has, as we shall see, special means of guided movement of the brewing cylinder 3.

The coffee machine 1 has a hydraulic circuit including a pump 8 feeding a flow of brewing water to the brewing chamber 4 of the brewing cylinder 3, and a boiler 9 in charge of heating the flow of brewing water.

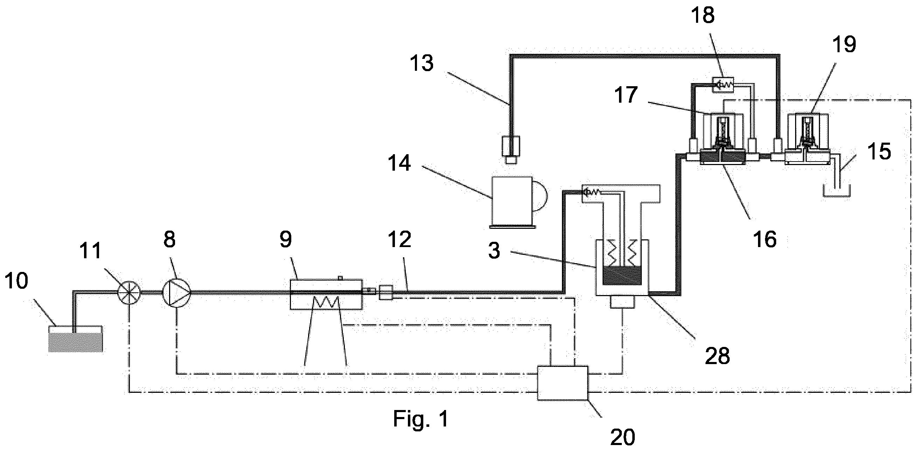

The hydraulic circuit of the coffee machine 1 further comprises, as shown in figure 1, a source 10 of brewing water which may be in form of a reservoir (as shown) or a connection to a water mains, a flowmeter 11 normally positioned upstream of the feed pump 8, a conduit 12 supplying the flow of brewing water to the brewing chamber 4 of the brewing cylinder 3, a conduit 13 for dispensing the brewed coffee into a cup 14, and a discharge duct 15 equipped with a discharge valve 19.

The hydraulic circuit also includes, downstream of the brewed cylinder 3, a shut-off valve 16 and a by-pass 17 of the shut-off valve 16 fitted with a frothing valve 18 having a preset opening.

All active elements of the hydraulic circuit are connected to an electronic controller 20 of the coffee machine 1.

Brewing chamber 4 has a cylindrical side wall 4a, a lower base 4b and an open upper access port 4c.

A closing piston 21 is positioned above the brewing cylinder 3 to close and open the brewing chamber 4.

The closing piston 21 is axially movable in the direction of translation T of the brewing cylinder 3 along a fixed guide support 21a.

The closing piston 21 more precisely is movable in contrast and by the action of elastic means. Elastic means may be formed, for example, by coil springs 27, in particular cylindrical springs 27 interposed between the fixed guide support 21a and the closing piston 21 and having an axis parallel to the axis of the closing piston 21.

The supply conduit 12 is hydraulically connected to the closing piston 21 which is configured as a shower suitable for injecting brewing water into the brewing chamber 4.

The dispensing conduit 13, on the other hand, is hydraulically connected to the brewing cylinder 3, which has a special outlet 28 for the brewed coffee.

The brewing cylinder 3 supports an ejection piston 22 sliding inside the brewing chamber 4 along the axis of the brewing cylinder 3.

The ejection piston 22 has perimeter seals 23 radially sealing with the side wall 4a of the brewing chamber 4.

The ejection piston 22 also has a stem 24 that extends below the brewing cylinder 3.

The piston stem 24 of the ejection piston 22 has a telescopic construction comprising an upper part 24a integral with the ejection piston 22 and a lower part 24b having one end external to the brewing cylinder 3 hinged to a fixed horizontal pin 25.

The horizontal pin 25 defines the axis of rotation R of the brewing cylinder 3.

The upper part 24a of piston stem 24 integral with the ejection piston 22 has a hollow construction to accommodate the lower part 24b of piston stem 24.

The piston stem 24 of the ejection piston 22 has a plug 33 of variable axial configuration for engagement and disengagement between the upper part 24a of the piston stem 24 and the lower part 24b of the piston stem 24.

Plug 33 has an axially elastic structure.

Specifically, plug 33 is housed along a diametral through-hole 37 of the lower part 24b of stem 24 and consists of two terminals 33a connected by a spring 33b.

The plug 33 can be actuated by a special actuator 34 integral with the upper part 24a of the stem 24.

In particular, the actuator 34 can operate on the terminals 33a protruding from the diametral hole 37 of the lower part 24b of the stem 24 to retract them within the diametral hole 37 itself. Actuator 34 can thus be overridden by plug 33 during a vertical movement of the upper part 24a of stem 24.

The actuator 34 is positioned on an inner surface of the upper part 24a of the stem 24, while on the outer surface of the upper part 24a of the stem 24 there is a stop 35 to intercept a flange 36 projecting inferiorly from the brewing cylinder 3.

The ejection piston 22 slides coaxially into the brewing cylinder 3 which in turn, when it performs the translatory movement along the T-direction, is coaxial to the closing piston 21 which in turn can slide coaxially to the brewing cylinder 3 in contrast and by the action of the elastic means 27.

The brewing cylinder 3 is rigidly supported by a carriage 26 specially guided, in a known and therefore non-descript manner, along an obligatory trajectory to make the brewing cylinder 3 perform its roto-translatory movement.

The means of movement of the brewing cylinder 3 comprise, in a manner known and therefore not described in detail, an electric motor and a transmission interposed between the electric motor and the carriage 26.

Advantageously, the coffee machine 1 provides detection means for detecting a height H of the dried spent coffee charge 7 present in the brewing chamber 4.

The detection means include a sensor 29 of a threshold position of the closing piston 21, and a sensor of the current position of the brewing cylinder 3.

Sensor 29 is configured to detect a threshold position of the closing piston 21 relative to the fixed guide support 21a.

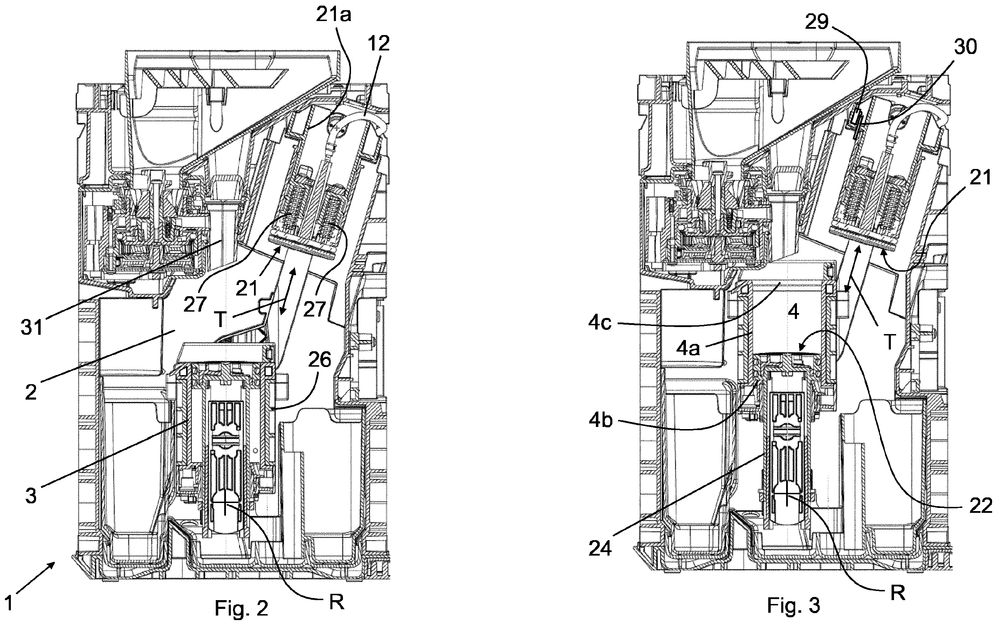

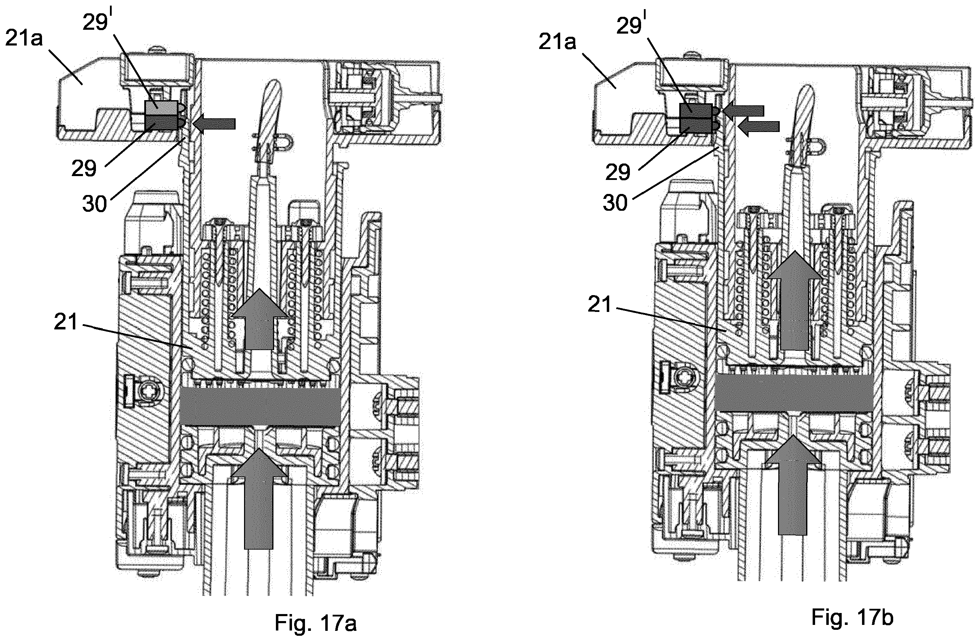

Said sensor 29 may be, for example, as shown in figures 3, 17a, 17b a microswitch fixed to the fixed guide support 21a and actuated by a probe 30 integral with the closing piston 21. The solution illustrated in figures 17a, 17b differs from the solution adopted in figure 3 only in the fact that, in addition to the threshold position sensor 29 of the closing piston 21, always formed by a microswitch, there is provided a further microswitch 29' which only acts as a safety device to detect the upper end position of the closing piston 21.

The threshold position sensor 29 of the closing piston 21 can alternatively be a linear position sensor which is preferably fixed to the fixed guide support 21a.

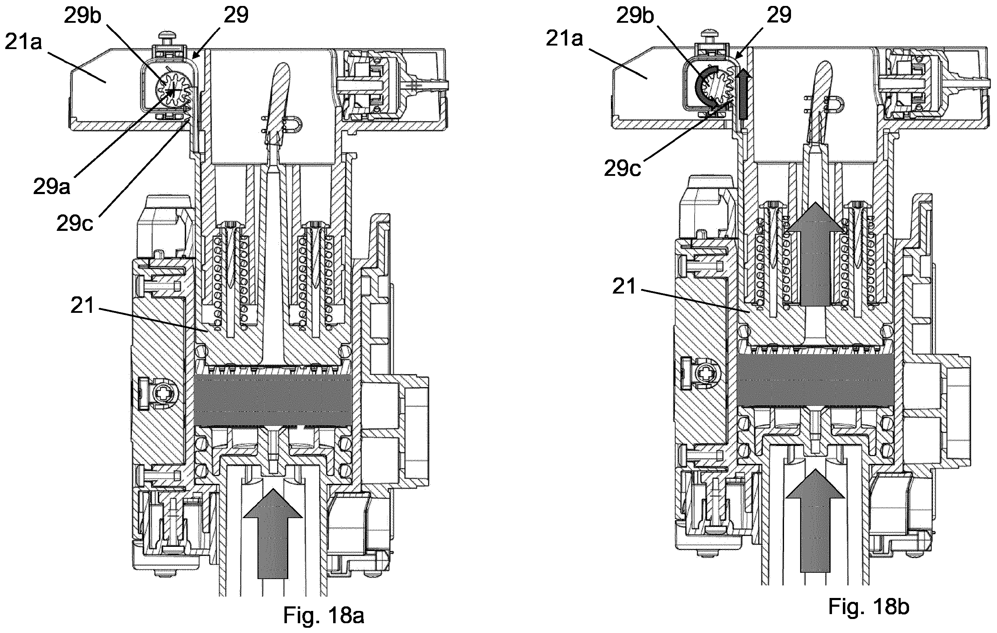

Figures 18a, 18b show one way of realising such a linear position sensor, in this case of the potentiometric type.

The potentiometric linear position sensor 29 measures the resistance of a resistive track (not shown) of variable length between a fixed reference point and a movable reference point identified by a slider (not shown) integral in rotation with a rotatable shaft 29a to which is coaxially attached a pinion 29b meshing with a rack 29c in turn integral with the closing piston 21. Due to the engagement between pinion 29b and rack 29c the current linear position of the closing piston 21 is uniquely associated with the current angular position of the shaft 29a which in turn is uniquely associated with the current angular position of the slider which is ultimately uniquely associated with the current length of the resistor being measured.

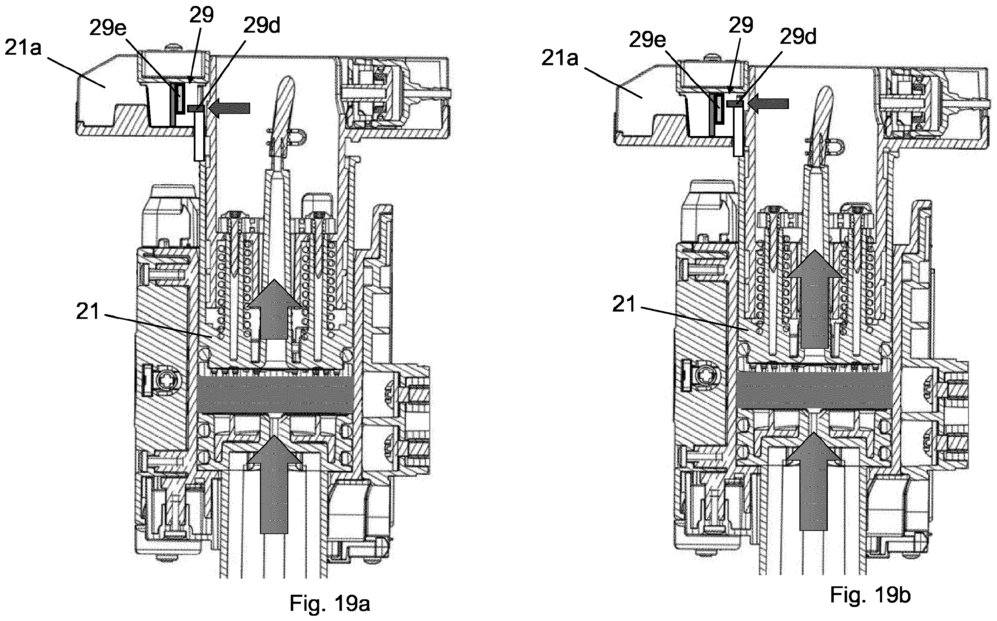

Figures 19a, 19b show one way of realising such a linear position sensor, in this case of the inductive type.

The inductive linear position sensor 29 measures the change in inductive coupling between a first movable magnetic element 29d attached to the closing piston 21 and a second fixed magnetic element 29e e.g. fixed guide support 21a.

The elastic means 27 are pre-tensioned to allow the threshold position to be reached by the closing piston 21 preferably when a pressure of between 1 bar and 3 bar acts on the closing piston 21 from inside the brewing chamber 4.

The current position sensor of brewing cylinder 3 (not shown) can be formed, for example, by an encoder associated with the electric drive motor of the carriage 26 by means of which the angular position of the shaft of the electric motor can be bi-univocally correlated with the linear position of carriage 26, and consequently of the brewing cylinder 3.

The operation of coffee machine 1 is basically as follows.

Controller 20 is programmed to drive a dispensing cycle that sequentially includes a closing step of the brewing chamber 4 where the brewing cylinder 3 is moved towards closing piston 21, a brewing step with the brewing cylinder 3 stopped, and a drying step where the brewing cylinder 3 is further moved towards closing piston 21.

In the drying step of the spent ground coffee charge 7, the brewing cylinder 3 is subjected to an upward movement in the T-direction for the compression of the spent coffee charge 7 against the closing piston 21 and the draining of the liquid it contains.

The operation of coffee machine 1 in more detail is as follows.

The brewing cylinder 3 is initially at its lower end A where its axis is oriented vertically below a hopper 31 for loading the ground coffee charge 5 dispensed from the coffee grinder 6.

The ejection piston 22 is in a protracted position towards the open top 4c of the brewing chamber 4 (figure 2).

The user selects a product, which can be espresso or drip coffee, by pressing a special control button (not shown) and the coffee machine 1 starts the corresponding dispensing cycle.

The electric motor drives the brewing cylinder 3, which in its guided movement initially performs a vertical upward movement while the ejection piston 22 initially remains stationary to recreate the brewing chamber 4 and allow it to be filled (figure 3).

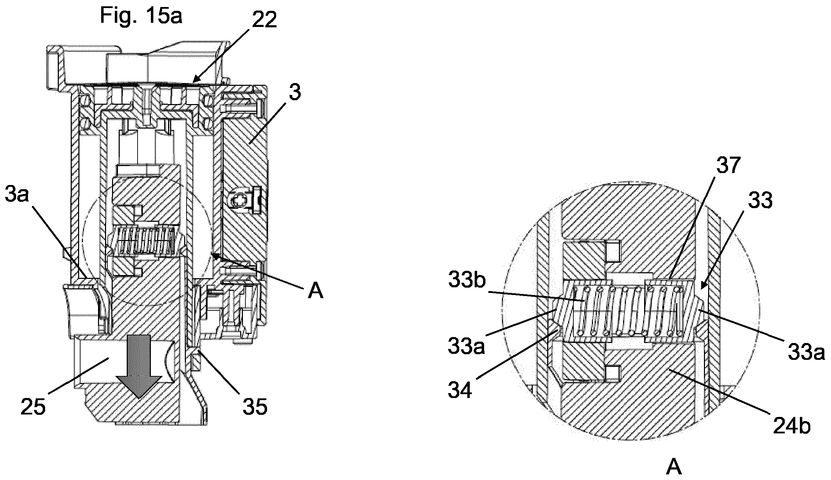

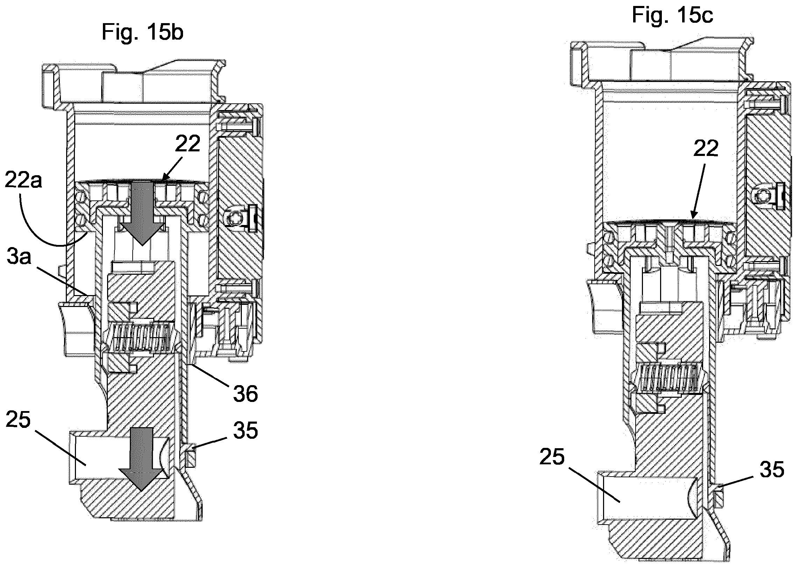

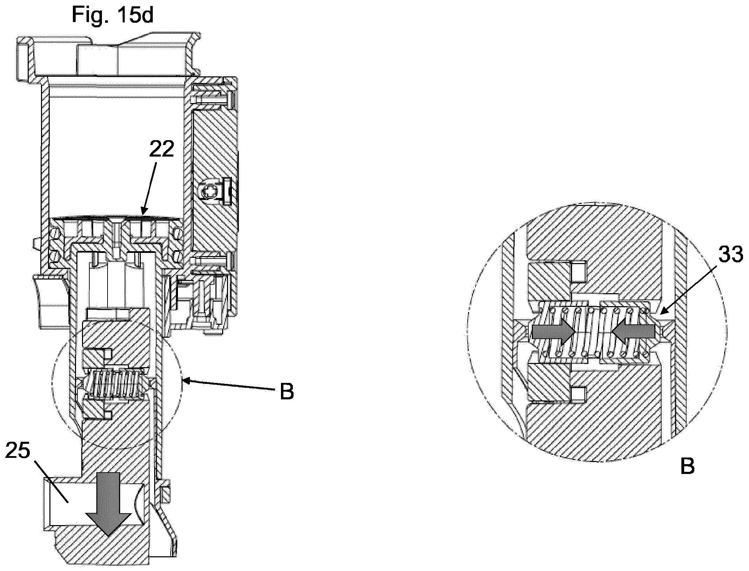

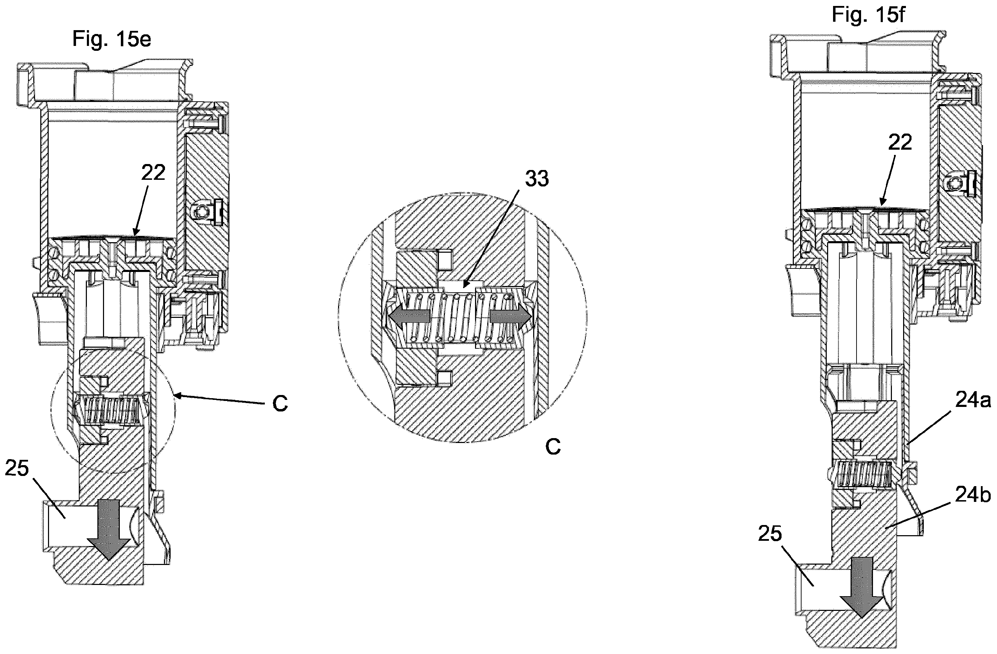

The ejection piston 22 initially remains stationary because the upper part 24a of its stem 24 is engaged with the lower part 24b of its stem 24: Figures 15a - 15c show that the plug 33 blocks the actuator 34 thus preventing the upper part 24a of the stem 24 of the ejecting piston 22 from rising.

At a certain point, however, the lower base 3a of the brewing cylinder 3 comes into contact with the backside 22a of the ejection piston 22 and pulls the upper part 24a of the piston stem 24 upwards with sufficient force to cause the retraction of the plug 33 by the actuator 34 and the consequent upward overriding, from below to above, of the plug 33 by the actuator 34 (Figures 15c - 15e).

The brewing cylinder 3 is then raised with the ejection piston 22 housed inside it in a retracted position towards the bottom of the brewing chamber 4 thus created.

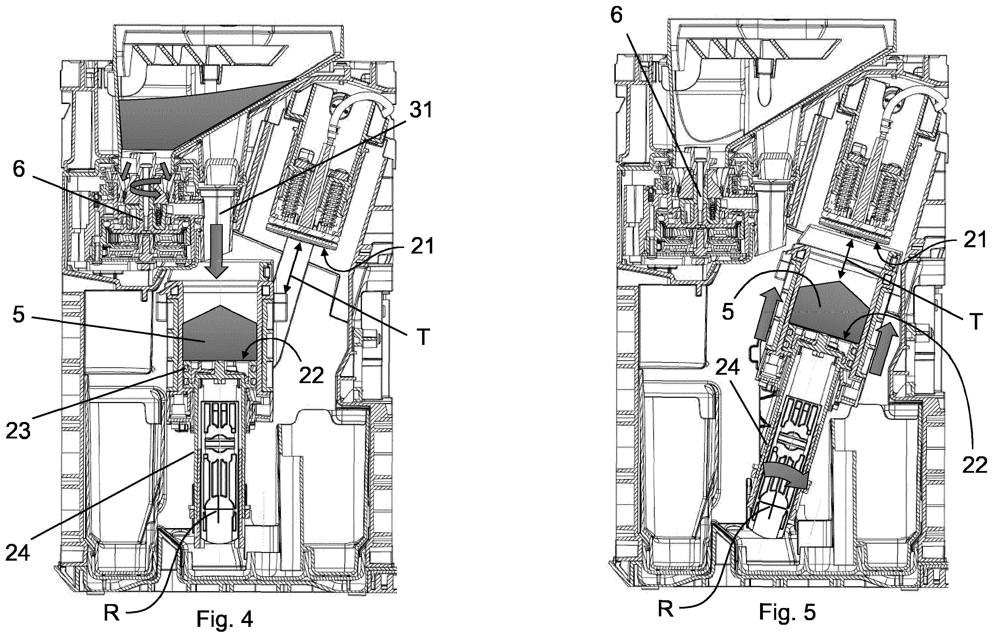

The grinder releases a charge of ground coffee 5 that from the hopper 31 by gravity flows into the brewing chamber 4 (figure 4).

The electric motor again drives the brewing cylinder 3, which in its guided movement now performs a rotation around the R-axis by which the axis of the brewing cylinder 3 aligns with the axis of the closing piston 21 along the T-direction (figure 5), and a subsequent upward movement along the T-direction until the brewing cylinder 3 engages with the closing piston 21. The brewing step then begins, in which the discharge valve 19 located on the discharge duct 15 is closed.

If espresso coffee is selected by the user, the shut-off valve 16 is closed and the brewed coffee goes to the valve 18, whereas if drip or American coffee is selected, the shut-off valve 16 is open and the by-pass 17 is not operating.

Controller 20 activates feed pump 8 and boiler 9 to supply a flow of brewing water to brewing cylinder 3.

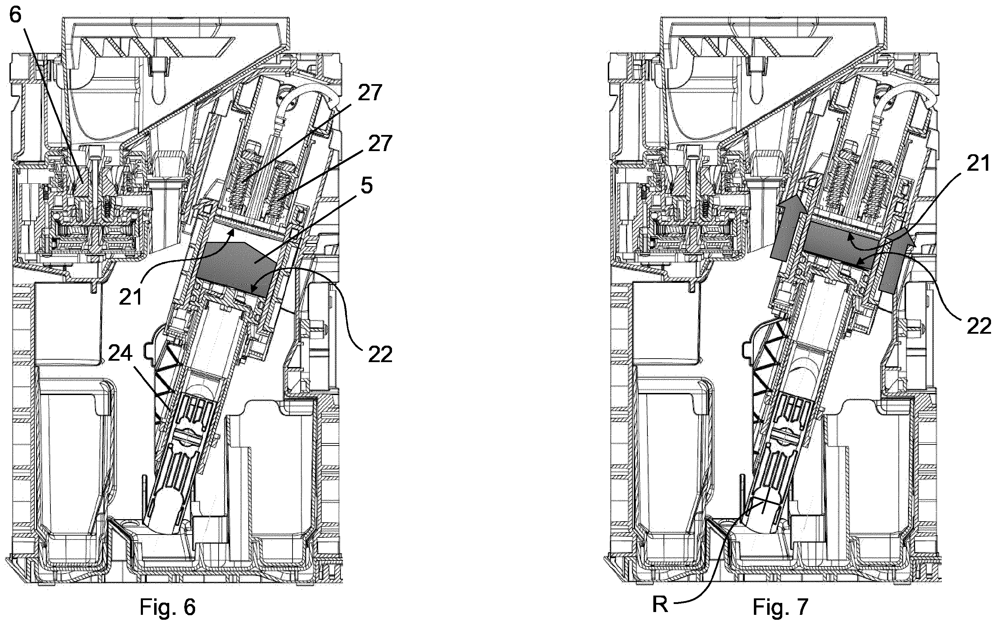

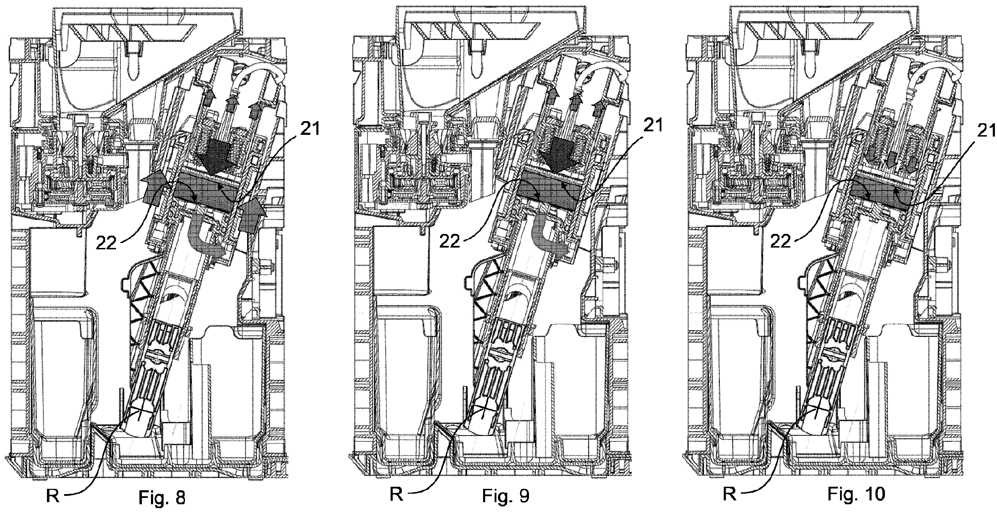

At the end of the brewing step, the controller 20 commands the opening of the discharge valve 19 located on the discharge duct 15, and commands the execution of the drying step (Figures 7 - 10).

At the end of the drying step of the spent ground coffee charge 7 the controller 20 drives the electric motor which moves the brewing cylinder 3 initially in a downward movement in the direction T until it disengages from the closing piston 21 and then returns it to its initial position A.

In particular, after a rotation of the brewing cylinder 3 contrary to the initial rotation, which follows the downward translation along the T axis, the brewing cylinder 3 returns with a vertical axis and performs a further downward vertical translation in which the ejection piston 22 rises in the brewing chamber 4 and brings the dried spent ground coffee charge 7 to the level of the access port 4c where a special scraper 32 automatically operates to remove it.

The lifting of the ejecting piston 22 is due to the fact that during the vertical descent of the brewing cylinder 3 the plug 33 intercepts the actuator 34 and prevents the further descent of the upper part 24a of the stem 24 of the ejecting piston 22 until a later moment when the flange 36 encounters the stop 35 and drags it downwards to re-engage the actuator 34 which overrides the plug 33 this time from above to below.

According to a particularly advantageous aspect of the invention, the controller 20 has in its memory an algorithm for calculating the grinding time of the grinder, which is capable of updating the grinding time of the grinder for the execution of a subsequent dispensing cycle. The controller is programmed to convert the measured value of the H-height of charge 7 into its weight and feeds the calculation algorithm with the calculated weight value to update the grinder's grinding time for a subsequent dispensing cycle.

In particular, the controller has in memory a Pref value of the theoretical reference flow rate of the grinder and, for each Qref reference value of the quantity by weight of ground coffee of each selectable beverage, a corresponding Tref reference value of the grinding time taken by the grinder, the known relationship applying: $Pref = Qref / Tef$

However, the current flow rate of the grinder may vary over time.

If the Pj value of the grinder's current flow rate (Pj≠Pref) changes in the j-th grinding cycle, a different quantity of ground coffee (Qj≠Qref) is obtained for the same grinding time (Tj=Tref). The machine controller knows the value Pj of the grinder's current flow rate because, once the value Qj of the quantity by weight of ground coffee obtained in the grinding time equal to Tref has been calculated, we have that Pj = Qj/Tref.

Given the value Pj of the grinder's current flow rate, the value of the grinding time Tk for a subsequent k-th grinding cycle associated with the same selected beverage will be subject to a correction ΔT, where ΔT = Tk-Tref, related to the variation ΔQ, where ΔQ = Qj-Qref.

In general, this correction ΔT is proportionally inverse to the variation ΔQ, in the sense that to an increase in the quantity of ground coffee the algorithm matches a decrease in the grinding time in a subsequent grinding cycle , and vice versa, to a decrease in the quantity of ground coffee the algorithm matches an increase in the grinding time in a subsequent grinding cycle.

The height H is the size of the dried spent coffee charge 7 along the axial direction of the brewing cylinder 3.

In order to detect the height H of the ground coffee charge 7, a preliminary operation is required, which can be performed once, periodically, or before the beginning of each dispensing cycle, in which the controller 20 moves the brewing cylinder 3, initially at its lower end stop corresponding to the position A , towards the closing piston 21 with the empty brewing chamber 4 until a predetermined position B assumed by the brewing cylinder 3 is identified, corresponding to the attainment of the threshold position by the closing piston 21 pushed by the ejection piston 22 and opposed by the elastic means 27.

The predetermined position B, as well as the lower end position A, is uniquely identifiable by the brewing cylinder position sensor 3.

The controller 20 at each dispensing cycle performs the brewing step at a position C of the brewing cylinder 3, which is determined as we shall see later, and performs the drying step by moving the brewing cylinder 3 towards the closing piston 21 up to an end position D' corresponding to the detection of the threshold position of the closing piston 21.

Brewing position C and this end position D' of brewing cylinder 3 are also uniquely identifiable by the brewing cylinder 3 position sensor.

At this point the controller 20 calculates the height H of the ground coffee charge 7 from the difference between the predetermined position B and the end position D' of the brewing cylinder 3.

Note the geometry of the brewing chamber 4 the controller 20 from height H calculates the volume of the ground coffee charge 7.

Note the density of the ground coffee, the controller 20 from the volume calculates the weight of the ground coffee charge 7.

The calculation algorithm, fed with the calculated weight value, corrects the grinding time for a subsequent dispensing cycle where the same drink is required.

The brewing position C of brewing cylinder 3 is determined differently depending on whether or not the selected beverage requires a compression step of the ground coffee charge before the brewing step.

If this is not required, in particular if the user selects a drip or American coffee, controller 20 automatically associates the selection made by the user with an already stored brewing position C of brewing cylinder 3.

The brewing position C of the brewing cylinder 3 must ensure that there is a veil of water over the ground coffee charge 5 during the brewing step.

On the other hand, if the selected beverage, typically an espresso, requires a pressing step of the ground coffee charge prior to the brewing step, the controller 20 determines the brewing position C of the brewing cylinder 3 from the position assumed by the brewing cylinder 3 when the closing piston 21 reaches the threshold position in the pressing step of the ground coffee charge prior to the brewing step.

The pressing step involves a movement of the brewing cylinder 3 towards the closing piston 21.

Once the position of the brewing cylinder 3 corresponding to the attainment of the threshold position by the closing piston 21 has been identified, the controller 20 automatically determines the brewing position of the brewing cylinder 3 which is, with respect to the position thus identified, lower by a predetermined amount to ensure the presence of a water film over the charge of ground coffee 5 compressed during the pressing step.

For greater drying efficiency, the drying step preferably comprises a first and at least a second sub-step separated by a waiting time period.

Each drying sub-step involves moving the brewing cylinder 3 towards the pressing piston 21 to an end position D, D' corresponding to the detection of the threshold position of the closing piston 21.

Controller 20 feeds the calculation algorithm to update the grinding time only if at the start position of both the first and second sub-drying step the closing piston 21 has not already reached the threshold position.

More precisely, drying in a dispensing cycle that runs regularly is as follows.

Initially, at the end of the brewing step, the closing piston 21 is below the threshold position, which means that the pressure inside the brewing chamber 4 is correctly below the pressure of between 1 bar and 3 bar required to cause the closing piston 21 to exert a thrust force in the opening direction greater than the elastic thrust force in the closing direction exerted by the elastic means 27.

The first sub-step of the drying step takes place as follows.

The electric motor moves the brewing cylinder 3 upwards.

Consequently, the ejecting piston 22, remaining in a retracted position in the brewing chamber 4, presses the spent ground coffee charge 7 against the closing piston 21 which retracts (rises) against the action of the elastic means 27, until it reaches the threshold position which, once detected by the threshold sensor 29, causes the electric motor to stop and consequently the brewing cylinder 3 to stop.

At this point, the first sub-step of the drying step ends with the brewing cylinder in a provisional end position D identified by the brewing cylinder position sensor 3 and the controller 20 foresees a waiting time period of a few seconds, in order to start draining the liquid contained in the charge of spent coffee ground 7 being dried .

The draining of the liquid causes a volume contraction of the charge of spent coffee ground 7 being dried, which causes the closing piston 21 to advance (downwards) below the threshold position due to the thrust of the elastic means 27.

At this point, controller 20 performs the second sub-drying step identical to the first sub-drying step but with the brewing cylinder achieving a definitive end position D' , identified by the brewing cylinder position sensor 3, above the provisional end position D.

At the end of the second drying sub-step, the controller 20 performs in the manner already described the calculation of the weight of the dried ground coffee charge 7 and feeds the calculation algorithm with the calculated weight value to update the drying time for the next dispensing cycle of the same type of beverage.

As mentioned, the height H of the dried ground coffee charge 7 is calculated using the position sensor of the brewing cylinder 3, specifically the encoder of the electric motor.

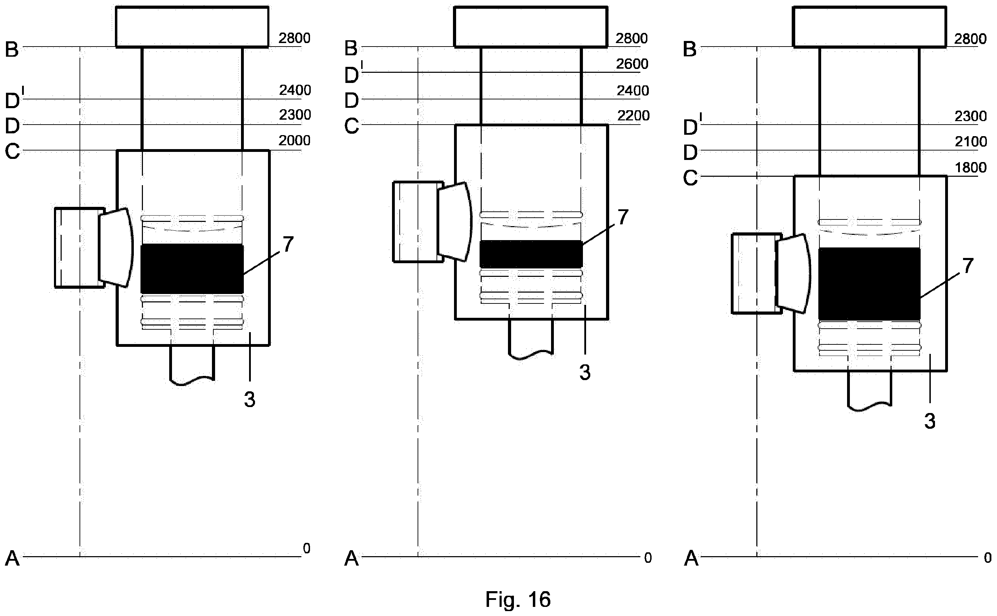

In figure 16, as an example, controller 20 estimates the following heights H (measured in number of encoder pulses):
First dispensing cycle: $H = B - D ′ = 2800 - 2400 = 400$
Second dispensing cycle: $H = B - D ′ = 2800 - 2600 = 200$
Third dispensing cycle: $H = B - D ′ = 2800 - 2300 = 300$

In a dispensing cycle that runs incorrectly, it can happen that before the first drying sub-step starts, the closing piston 21 is not below its threshold position.

In this case, the drying step can be performed by subjecting the brewing cylinder 3 to an upward stroke of a predetermined or otherwise determined entity, but the controller 20 does not calculate the weight of the dried ground coffee charge 7 and the calculation algorithm is not used to update the grinding time for the next dispensing cycle of the same type of beverage; instead, controller 20 decreases the grinding time for the next dispensing cycle of the same type of beverage by a predetermined amount in order to quickly regularise subsequent dispensing cycles of the same type of beverage.

In a dispensing cycle that runs incorrectly, it can also happen that before the start of the second drying sub-step, the closing piston 21 has not returned below its threshold position.

Also in this case, the drying can be concluded by subjecting the brewing cylinder 3 to an upward stroke of a predetermined entity or determined in some other way, but the controller 20 does not calculate the weight of the dried spent coffee ground charge 7 and the calculation algorithm does not update the grinding time for the next dispensing cycle of the same type of beverage; controller 20, on the other hand, decreases the grinding time for the next dispensing cycle of the same type of beverage by a predetermined amount.

The coffee machine and the method of coffee preparation thus conceived are susceptible to numerous modifications and variations, all within the scope of the inventive concept, as defined by the appended claims.

In practice, the materials used, as well as the dimensions, can be any according to requirements and the state of the art.

## Claims

1. A coffee machine (1) comprising a coffee grinder (6), a brewing cylinder (3) movable along a direction of translation (T) and presenting a brewing chamber (4) configured to receive a charge of ground coffee (5) dispensed from said grinder (6), an ejection piston (22) movable along the brewing chamber (4) for ejecting the spent ground coffee charge (7), a closing piston (21) of said brewing chamber (4), wherein said closing piston (21) is movable along said direction of translation (T) in contrast and by action of elastic means (27), a controller (20) having in its memory an algorithm for calculating the grinding time of said grinder (6), said controller (20) being programmed to drive a dispensing cycle which sequentially provides a closing step of the brewing chamber (4) where the brewing cylinder (3) is moved towards the closing piston (21), a brewing step with the brewing cylinder (3) stopped, and a drying step where the brewing cylinder (3) is further moved towards the closing piston (21) for compressing the spent ground coffee charge (7) against the closing piston (21) and draining the liquid contained therein to a discharge duct (15) equipped with a discharge valve (19), **characterised by** the fact that it comprises detection means for detecting a height (H) of the dried spent ground coffee charge (7) present in the brewing chamber (4) and by the fact that said controller (20) is programmed to calculate from the detected value of said height (H) the weight of said dried spent ground coffee charge (7), feed said calculation algorithm with the value of said calculated weight to update the grinding time of said grinder (6), and employ said updated grinding time for a subsequent dispensing cycle.

2. Coffee machine (1) according to claim 1 **characterised by** the fact that said algorithm from said calculated weight calculates a flow rate deviation between a current value (Pj) of the grinder flow rate and a reference value (Pref) of the grinder flow rate, and updates the grinding time by correlating it with said deviation.

3. Coffee machine (1) according to any preceding claim **characterised by** the fact that said detection means comprise a sensor (29) of a threshold position of said closing piston (21), and a current position sensor of said brewing cylinder (3), and by the fact that said controller (20) is programmed for:
- moving said brewing cylinder (3) towards said closing piston (21) with said empty brewing chamber (4) until identifying a predefined position (B) assumed by said brewing cylinder (3) at the achievement of said threshold position by said closing piston (21) pushed by said ejection piston (22) and counteracted by said elastic means (27);
- with each dispensing cycle, performing the brewing step at a given brewing position ( C ) of the brewing cylinder (3), and performing the drying step by moving the brewing cylinder (3) towards the closing piston (21) up to an end position (D') corresponding to the detection of said threshold position of the closing piston (21);
- calculating said height of the dried spent ground coffee charge (7) from the difference between said predefined position (B) and said end position (D').

4. Coffee machine (1) according to the preceding claim, **characterised by** the fact that said controller (20) is programmed to determine said brewing position ( C ) from the selection of the beverage made by the user.

5. Coffee machine (1) according to claim 4, **characterised in that** said controller (20) is programmed to determine said brewing position (C ) from the position assumed by said brewing cylinder (3) when the closing piston (21) achieves said threshold position in a pressing step of the ground coffee charge preceding the brewing step, where the pressing step comprises after the closing step a movement of the brewing cylinder (3) towards the closing piston (21).

6. Coffee machine (1) according to any one of claims 3 to 5, **characterised in that** said drying step comprises a first and at least a second drying sub-step separated by a waiting time period, where each drying sub-step comprises moving the brewing cylinder (3) towards the closing piston (21) to a provisional end position (D) and respectively definitive end position (D') corresponding to the detection of said threshold position of the closing piston (21).

7. Coffee machine (1) according to the preceding claim, **characterised by** the fact that said controller (20) is programmed to update the grinding time by means of said calculation algorithm only if at the start position of said first and second sub-step drying, said closing piston (21) has not already reached said threshold position.

8. Coffee machine (1) according to any one of claims 3 to 6, **characterised by** the fact that said elastic means (27) are pre-tensioned to enable the attainment of said threshold position by said closing piston (21) when a pressure of between 1 bar and 3 bar acts on the closing piston (21) from the inside of the brewing chamber (4).

9. Coffee machine (1) according to any preceding claim, **characterised by** the fact that said ejection piston (22) has a telescopic stem (24) comprising an upper part (24a) integral with the ejecting piston (22) and a lower part (24b) having an end outside the brewing cylinder (3) which is hinged to a fixed pin (25).

10. Coffee machine (1) according to the preceding claim, **characterised in that** the piston stem (24) of the ejection piston (22) has a plug (33) having a variable axial configuration for engaging and disengaging between the upper part (24a) of the piston stem (24) and the lower part (24b) of the piston stem (24).

11. Coffee machine (1) according to any one of claims 3 to 10, **characterised by** the fact that said sensor (29) of a threshold position of said closing piston (21) comprises at least a first microswitch.

12. Coffee machine (1) according to the preceding claim, **characterised by** comprising a second safety microswitch (29') configured and arranged to detect an upper end position of said closing piston (21).

13. Coffee machine (1) according to any one of claims 3 to 10, **characterised by** the fact that said sensor (29) of a threshold position of said closing piston (21) comprises a linear position sensor.

14. A method for calculating the grinding time of a coffee grinder (6) incorporated in a coffee machine (1) comprising a brewing cylinder (3) movable along a direction of translation (T) and presenting a brewing chamber (4) configured to receive a charge of coffee ground (5) dispensed from said coffee grinder (6) for performing a brewing cycle, an ejection piston (22) sliding along said brewing chamber (4) for ejecting the spent ground coffee charge (7), a closing piston (21) of said brewing chamber (4), where said closing piston (21) is movable along said translation direction (T) in contrast and by action of elastic means (27), a controller (20) presenting in memory an algorithm for calculating the grinding time of said grinder (6), said controller (20) being programmed to drive a dispensing cycle comprising in sequence a closing step of the brewing chamber (4) where the brewing cylinder (3) is moved towards the closing piston (21), a brewing step with the brewing cylinder (3) stopped and a drying step wherein the brewing cylinder (3) is further moved towards the closing piston (21) for compressing the spent coffee charge (7) against the closing piston (21) and draining the liquid contained therein to a discharge duct (15) equipped with a discharge valve (19), **characterised by** the fact of detecting a height (H) of the dried spent coffee charge (7), calculating from the detected value of said height (H) the weight of said dried spent coffee charge (7), feeding said calculation algorithm with the value of said weight calculated to update the grinding time of said grinder for a subsequent dispensing cycle.

15. Method for calculating the grinding time according to the preceding claim, **characterised in that** said algorithm from said calculated weight calculates a flow rate deviation between a current value (Pj) of the grinder flow rate and a reference value (Pref) of the grinder flow rate, and updates the grinding time by correlating it with said deviation.

## Patentansprüche

1. Kaffeemaschine (1), umfassend eine Kaffeemühle (6), einen Brühzylinder (3), der entlang einer Translationsrichtung (T) bewegbar ist und eine Brühkammer (4) aufweist, die dazu eingerichtet ist, eine von der Kaffeemühle (6) abgegebene Ladung gemahlenen Kaffees (5) aufzunehmen, einen Ausstoßkolben (22), der entlang der Brühkammer (4) bewegbar ist, um die verbrauchte Ladung gemahlenen Kaffees (7) auszustoßen, einen Verschlusskolben (21) der Brühkammer (4), wobei der Verschlusskolben (21) entlang der Translationsrichtung (T) entgegen der Wirkung und unter der Wirkung elastischer Mittel (27) bewegbar ist, eine Steuereinheit (20), die in ihrem Speicher einen Algorithmus zur Berechnung der Mahldauer der Kaffeemühle (6) aufweist, wobei die Steuereinheit (20) dazu programmiert ist, einen Ausgabezyklus anzusteuern, der nacheinander einen Verschlussschritt der Brühkammer (4), bei dem der Brühzylinder (3) in Richtung des Verschlusskolbens (21) bewegt wird, einen Brühschritt bei angehaltenem Brühzylinder (3) und einen Trocknungsschritt vorsieht, bei dem der Brühzylinder (3) weiter in Richtung des Verschlusskolbens (21) bewegt wird, um die verbrauchte Ladung gemahlenen Kaffees (7) gegen den Verschlusskolben (21) zu komprimieren und die darin enthaltene Flüssigkeit zu einem mit einem Ablassventil (19) versehenen Ablasskanal (15) abzuführen, **dadurch gekennzeichnet, dass** sie Erfassungsmittel zum Erfassen einer Höhe (H) der in der Brühkammer (4) vorhandenen getrockneten verbrauchten Ladung gemahlenen Kaffees (7) umfasst und dass die Steuereinheit (20) dazu programmiert ist, aus dem erfassten Wert der Höhe (H) das Gewicht der getrockneten verbrauchten Ladung gemahlenen Kaffees (7) zu berechnen, den Berechnungsalgorithmus mit dem Wert des berechneten Gewichts zu speisen, um die Mahldauer der Kaffeemühle (6) zu aktualisieren, und die aktualisierte Mahldauer für einen nachfolgenden Ausgabezyklus zu verwenden.

2. Kaffeemaschine (1) nach Anspruch 1, **dadurch gekennzeichnet, dass** der Algorithmus aus dem berechneten Gewicht eine Durchsatzabweichung zwischen einem aktuellen Wert (Pj) des Durchsatzes der Kaffeemühle und einem Referenzwert (Pref) des Durchsatzes der Kaffeemühle berechnet und die Mahldauer durch Korrelation mit dieser Abweichung aktualisiert.

3. Kaffeemaschine (1) nach einem der vorhergehenden Ansprüche, **dadurch gekennzeichnet, dass** die Erfassungsmittel einen Sensor (29) einer Schwellenposition des Verschlusskolbens (21) und einen Sensor der aktuellen Position des Brühzylinders (3) umfassen, und dadurch, dass die Steuereinheit (20) programmiert ist zum:
• Bewegen des Brühzylinders (3) in Richtung des Verschlusskolbens (21) bei leerer Brühkammer (4), bis eine vordefinierte Position (B) identifiziert wird, die der Brühzylinder (3) bei Erreichen der Schwellenposition durch den Verschlusskolben (21), der durch den Ausstoßkolben (22) gedrückt und durch die elastischen Mittel (27) entgegengewirkt wird, einnimmt;
• Durchführen, bei jedem Ausgabezyklus, des Brühschritts in einer bestimmten Brühposition (C) des Brühzylinders (3) und Durchführen des Trocknungsschritts durch Bewegen des Brühzylinders (3) in Richtung des Verschlusskolbens (21) bis zu einer Endposition (D'), die der Erfassung der Schwellenposition des Verschlusskolbens (21) entspricht;
• Berechnen der Höhe der getrockneten verbrauchten Ladung gemahlenen Kaffees (7) aus der Differenz zwischen der vordefinierten Position (B) und der Endposition (D').

4. Kaffeemaschine (1) nach dem vorhergehenden Anspruch, **dadurch gekennzeichnet, dass** die Steuereinheit (20) dazu programmiert ist, die Brühposition (C) aus der vom Benutzer vorgenommenen Getränkeauswahl zu bestimmen.

5. Kaffeemaschine (1) nach Anspruch 4, **dadurch gekennzeichnet, dass** die Steuereinheit (20) dazu programmiert ist, die Brühposition (C) aus der Position zu bestimmen, die der Brühzylinder (3) einnimmt, wenn der Verschlusskolben (21) in einem dem Brühschritt vorausgehenden Pressschritt der Ladung gemahlenen Kaffees die Schwellenposition erreicht, wobei der Pressschritt nach dem Verschlussschritt eine Bewegung des Brühzylinders (3) in Richtung des Verschlusskolbens (21) umfasst.

6. Kaffeemaschine (1) nach einem der Ansprüche 3 bis 5, **dadurch gekennzeichnet, dass** der Trocknungsschritt einen ersten und mindestens einen zweiten Trocknungsteilschritt umfasst, die durch eine Wartezeitspanne voneinander getrennt sind, wobei jeder Trocknungsteilschritt das Bewegen des Brühzylinders (3) in Richtung des Verschlusskolbens (21) bis zu einer vorläufigen Endposition (D) beziehungsweise einer endgültigen Endposition (D') umfasst, die jeweils der Erfassung der Schwellenposition des Verschlusskolbens (21) entsprechen.

7. Kaffeemaschine (1) nach dem vorhergehenden Anspruch, **dadurch gekennzeichnet, dass** die Steuereinheit (20) dazu programmiert ist, die Mahldauer mittels des Berechnungsalgorithmus nur dann zu aktualisieren, wenn der Verschlusskolben (21) in der Startposition des ersten und des zweiten Trocknungsteilschritts die Schwellenposition noch nicht erreicht hat.

8. Kaffeemaschine (1) nach einem der Ansprüche 3 bis 6, **dadurch gekennzeichnet, dass** die elastischen Mittel (27) vorgespannt sind, um das Erreichen der Schwellenposition durch den Verschlusskolben (21) zu ermöglichen, wenn auf den Verschlusskolben (21) vom Inneren der Brühkammer (4) her ein Druck zwischen 1 bar und 3 bar wirkt.

9. Kaffeemaschine (1) nach einem der vorhergehenden Ansprüche, **dadurch gekennzeichnet, dass** der Ausstoßkolben (22) einen teleskopischen Schaft (24) aufweist, der einen mit dem Ausstoßkolben (22) einstückigen oberen Teil (24a) und einen unteren Teil (24b) umfasst, der ein außerhalb des Brühzylinders (3) liegendes Ende aufweist, das an einem festen Stift (25) angelenkt ist.

10. Kaffeemaschine (1) nach dem vorhergehenden Anspruch, **dadurch gekennzeichnet, dass** der Kolbenschaft (24) des Ausstoßkolbens (22) einen Stopfen (33) mit variabler axialer Konfiguration zum Einrücken und Ausrücken zwischen dem oberen Teil (24a) des Kolbenschafts (24) und dem unteren Teil (24b) des Kolbenschafts (24) aufweist.

11. Kaffeemaschine (1) nach einem der Ansprüche 3 bis 10, **dadurch gekennzeichnet, dass** der Sensor (29) einer Schwellenposition des Verschlusskolbens (21) mindestens einen ersten Mikroschalter umfasst.

12. Kaffeemaschine (1) nach dem vorhergehenden Anspruch, **dadurch gekennzeichnet, dass** sie einen zweiten Sicherheitsmikroschalter (29') umfasst, der dazu eingerichtet und angeordnet ist, eine obere Endposition des Verschlusskolbens (21) zu erfassen.

13. Kaffeemaschine (1) nach einem der Ansprüche 3 bis 10, **dadurch gekennzeichnet, dass** der Sensor (29) einer Schwellenposition des Verschlusskolbens (21) einen linearen Positionssensor umfasst.

14. Verfahren zur Berechnung der Mahldauer einer in eine Kaffeemaschine (1) integrierten Kaffeemühle (6), wobei die Kaffeemaschine (1) einen Brühzylinder (3), der entlang einer Translationsrichtung (T) bewegbar ist und eine Brühkammer (4) aufweist, die dazu eingerichtet ist, eine von der Kaffeemühle (6) abgegebene Ladung gemahlenen Kaffees (5) zur Durchführung eines Brühzyklus aufzunehmen, einen entlang der Brühkammer (4) gleitenden Ausstoßkolben (22) zum Ausstoßen der verbrauchten Ladung gemahlenen Kaffees (7), einen Verschlusskolben (21) der Brühkammer (4), wobei der Verschlusskolben (21) entlang der Translationsrichtung (T) entgegen der Wirkung und unter der Wirkung elastischer Mittel (27) bewegbar ist, sowie eine Steuereinheit (20) umfasst, die in ihrem Speicher einen Algorithmus zur Berechnung der Mahldauer der Kaffeemühle (6) aufweist, wobei die Steuereinheit (20) dazu programmiert ist, einen Ausgabezyklus anzusteuern, der nacheinander einen Verschlussschritt der Brühkammer (4), bei dem der Brühzylinder (3) in Richtung des Verschlusskolbens (21) bewegt wird, einen Brühschritt bei angehaltenem Brühzylinder (3) und einen Trocknungsschritt umfasst, bei dem der Brühzylinder (3) weiter in Richtung des Verschlusskolbens (21) bewegt wird, um die verbrauchte Kaffeeladung (7) gegen den Verschlusskolben (21) zu komprimieren und die darin enthaltene Flüssigkeit zu einem mit einem Ablassventil (19) versehenen Ablasskanal (15) abzuführen, **dadurch gekennzeichnet, dass** eine Höhe (H) der getrockneten verbrauchten Kaffeeladung (7) erfasst wird, aus dem erfassten Wert der Höhe (H) das Gewicht der getrockneten verbrauchten Kaffeeladung (7) berechnet wird, und der Berechnungsalgorithmus mit dem Wert des berechneten Gewichts gespeist wird, um die Mahldauer der Kaffeemühle für einen nachfolgenden Ausgabezyklus zu aktualisieren.

15. Verfahren zur Berechnung der Mahldauer nach dem vorhergehenden Anspruch, **dadurch gekennzeichnet, dass** der Algorithmus aus dem berechneten Gewicht eine Durchsatzabweichung zwischen einem aktuellen Wert (Pj) des Durchsatzes der Kaffeemühle und einem Referenzwert (Pref) des Durchsatzes der Kaffeemühle berechnet und die Mahldauer durch Korrelation mit dieser Abweichung aktualisiert.

## Revendications

1. Machine à café (1) comprenant un moulin à café (6), un cylindre d'infusion (3) mobile selon une direction de translation (T) et présentant une chambre d'infusion (4) configurée pour recevoir une charge de café moulu (5) distribuée par ledit moulin (6), un piston d'éjection (22) mobile le long de la chambre d'infusion (4) pour éjecter la charge de café moulu épuisée (7), un piston de fermeture (21) de ladite chambre d'infusion (4), dans laquelle ledit piston de fermeture (21) est mobile selon ladite direction de translation (T) en opposition à et sous l'action de moyens élastiques (27), une unité de commande (20) ayant dans sa mémoire un algorithme de calcul du temps de mouture dudit moulin (6), ladite unité de commande (20) étant programmée pour commander un cycle de distribution qui prévoit séquentiellement une étape de fermeture de la chambre d'infusion (4), dans laquelle le cylindre d'infusion (3) est déplacé vers le piston de fermeture (21), une étape d'infusion avec le cylindre d'infusion (3) arrêté, et une étape de séchage dans laquelle le cylindre d'infusion (3) est déplacé davantage vers le piston de fermeture (21) pour comprimer la charge de café moulu épuisée (7) contre le piston de fermeture (21) et drainer le liquide qu'elle contient vers un conduit d'évacuation (15) équipé d'une soupape d'évacuation (19), **caractérisée en ce qu'**elle comprend des moyens de détection pour détecter une hauteur (H) de la charge de café moulu épuisée séchée (7) présente dans la chambre d'infusion (4), et **en ce que** ladite unité de commande (20) est programmée pour calculer, à partir de la valeur détectée de ladite hauteur (H), le poids de ladite charge de café moulu épuisée séchée (7), alimenter ledit algorithme de calcul avec la valeur dudit poids calculé afin de mettre à jour le temps de mouture dudit moulin (6), et utiliser ledit temps de mouture mis à jour pour un cycle de distribution ultérieur.

2. Machine à café (1) selon la revendication 1, **caractérisée en ce que** ledit algorithme calcule, à partir dudit poids calculé, un écart de débit entre une valeur actuelle (Pj) du débit du moulin et une valeur de référence (Pref) du débit du moulin, et met à jour le temps de mouture en le corrélant audit écart.

3. Machine à café (1) selon l'une quelconque des revendications précédentes, **caractérisée en ce que** lesdits moyens de détection comprennent un capteur (29) d'une position seuil dudit piston de fermeture (21), et un capteur de position actuelle dudit cylindre d'infusion (3), et **en ce que** ladite unité de commande (20) est programmée pour :
• déplacer ledit cylindre d'infusion (3) vers ledit piston de fermeture (21), avec ladite chambre d'infusion (4) vide, jusqu'à identifier une position prédéfinie (B) prise par ledit cylindre d'infusion (3) lors de l'atteinte de ladite position seuil par ledit piston de fermeture (21), poussé par ledit piston d'éjection (22) et contrarié par lesdits moyens élastiques (27) ;
• à chaque cycle de distribution, réaliser l'étape d'infusion dans une position d'infusion donnée (C) du cylindre d'infusion (3), et réaliser l'étape de séchage en déplaçant le cylindre d'infusion (3) vers le piston de fermeture (21) jusqu'à une position finale (D') correspondant à la détection de ladite position seuil du piston de fermeture (21) ;
• calculer ladite hauteur de la charge de café moulu épuisée séchée (7) à partir de la différence entre ladite position prédéfinie (B) et ladite position finale (D').

4. Machine à café (1) selon la revendication précédente, **caractérisée en ce que** ladite unité de commande (20) est programmée pour déterminer ladite position d'infusion (C) à partir de la sélection de la boisson effectuée par l'utilisateur.

5. Machine à café (1) selon la revendication 4, **caractérisée en ce que** ladite unité de commande (20) est programmée pour déterminer ladite position d'infusion (C) à partir de la position prise par ledit cylindre d'infusion (3) lorsque le piston de fermeture (21) atteint ladite position seuil lors d'une étape de pressage de la charge de café moulu précédant l'étape d'infusion, l'étape de pressage comprenant, après l'étape de fermeture, un déplacement du cylindre d'infusion (3) vers le piston de fermeture (21).

6. Machine à café (1) selon l'une quelconque des revendications 3 à 5, **caractérisée en ce que** ladite étape de séchage comprend une première et au moins une deuxième sous-étape de séchage séparées par une période d'attente, chaque sous-étape de séchage comprenant le déplacement du cylindre d'infusion (3) vers le piston de fermeture (21) jusqu'à une position finale provisoire (D), respectivement une position finale définitive (D'), correspondant à la détection de ladite position seuil du piston de fermeture (21).

7. Machine à café (1) selon la revendication précédente, **caractérisée en ce que** ladite unité de commande (20) est programmée pour mettre à jour le temps de mouture au moyen dudit algorithme de calcul uniquement si, à la position de départ de ladite première et de ladite deuxième sous-étape de séchage, ledit piston de fermeture (21) n'a pas déjà atteint ladite position seuil.

8. Machine à café (1) selon l'une quelconque des revendications 3 à 6, **caractérisée en ce que** lesdits moyens élastiques (27) sont précontraints pour permettre l'atteinte de ladite position seuil par ledit piston de fermeture (21) lorsqu'une pression comprise entre 1 bar et 3 bars agit sur le piston de fermeture (21) depuis l'intérieur de la chambre d'infusion (4).

9. Machine à café (1) selon l'une quelconque des revendications précédentes, **caractérisée en ce que** ledit piston d'éjection (22) présente une tige télescopique (24) comprenant une partie supérieure (24a) solidaire du piston d'éjection (22) et une partie inférieure (24b) ayant une extrémité située à l'extérieur du cylindre d'infusion (3), laquelle est articulée à une broche fixe (25).

10. Machine à café (1) selon la revendication précédente, **caractérisée en ce que** la tige de piston (24) du piston d'éjection (22) présente un bouchon (33) ayant une configuration axiale variable pour l'engagement et le désengagement entre la partie supérieure (24a) de la tige de piston (24) et la partie inférieure (24b) de la tige de piston (24).

11. Machine à café (1) selon l'une quelconque des revendications 3 à 10, **caractérisée en ce que** ledit capteur (29) d'une position seuil dudit piston de fermeture (21) comprend au moins un premier microrupteur.

12. Machine à café (1) selon la revendication précédente, **caractérisée en ce qu'**elle comprend un second microrupteur de sécurité (29') configuré et agencé pour détecter une position finale supérieure dudit piston de fermeture (21).

13. Machine à café (1) selon l'une quelconque des revendications 3 à 10, **caractérisée en ce que** ledit capteur (29) d'une position seuil dudit piston de fermeture (21) comprend un capteur de position linéaire.

14. Procédé de calcul du temps de mouture d'un moulin à café (6) incorporé dans une machine à café (1), comprenant un cylindre d'infusion (3) mobile selon une direction de translation (T) et présentant une chambre d'infusion (4) configurée pour recevoir une charge de café moulu (5) distribuée par ledit moulin à café (6) pour réaliser un cycle d'infusion, un piston d'éjection (22) coulissant le long de ladite chambre d'infusion (4) pour éjecter la charge de café moulu épuisée (7), un piston de fermeture (21) de ladite chambre d'infusion (4), dans lequel ledit piston de fermeture (21) est mobile selon ladite direction de translation (T) en opposition à et sous l'action de moyens élastiques (27), une unité de commande (20) présentant en mémoire un algorithme de calcul du temps de mouture dudit moulin (6), ladite unité de commande (20) étant programmée pour commander un cycle de distribution comprenant en séquence une étape de fermeture de la chambre d'infusion (4), dans laquelle le cylindre d'infusion (3) est déplacé vers le piston de fermeture (21), une étape d'infusion avec le cylindre d'infusion (3) arrêté, et une étape de séchage dans laquelle le cylindre d'infusion (3) est déplacé davantage vers le piston de fermeture (21) pour comprimer la charge de café épuisée (7) contre le piston de fermeture (21) et drainer le liquide qu'elle contient vers un conduit d'évacuation (15) équipé d'une soupape d'évacuation (19), **caractérisé par** le fait de détecter une hauteur (H) de la charge de café épuisée séchée (7), de calculer, à partir de la valeur détectée de ladite hauteur (H), le poids de ladite charge de café épuisée séchée (7), et d'alimenter ledit algorithme de calcul avec la valeur dudit poids calculé afin de mettre à jour le temps de mouture dudit moulin pour un cycle de distribution ultérieur.

15. Procédé de calcul du temps de mouture selon la revendication précédente, **caractérisé en ce que** ledit algorithme calcule, à partir dudit poids calculé, un écart de débit entre une valeur actuelle (Pj) du débit du moulin et une valeur de référence (Pref) du débit du moulin, et met à jour le temps de mouture en le corrélant audit écart.
